# EUROPÄISCHE PATENTSCHRIFT

(11) **EP 1 208 373 B1**
(45) Veröffentlichungstag und Bekanntmachung des Hinweises auf die Patenterteilung: **20.04.2005**
(21) Anmeldenummer: 00965784.2
(22) Anmeldetag: 22.08.2000
(51) Int. Cl.: G01N 29/28

(54) **ANKOPPELMEDIUM FÜR TRANSVERSALE ULTRASCHALLWELLEN**
COUPLING MEDIUM FOR TRANSVERSAL ULTRASONIC WAVES
MILIEU DE COUPLAGE POUR ONDES ULTRASONORES TRANSVERSALES

(30) Priorität: 30.08.1999 DE 19941198
(43) Veröffentlichungstag der Anmeldung: 29.05.2002
(73) Patentinhaber: Fraunhofer-Gesellschaft zur Förderung der angewandten Forschung e.V., 80686 München (DE)
(72) Erfinder: VOLKE, Frank, 66386 St. Ingbert (DE); MEICHE, Jürgen, D-66386 St. Ingbert (DE)
(74) Vertreter: Gagel, Roland, Dr.
(86) Internationale Anmeldenummer: PCT/DE2000/002887
(87) Internationale Veröffentlichungsnummer: WO 2001/016590

(56) Entgegenhaltungen:
- DE-A- 19 611 769
- US-A- 4 905 700
- PATENT ABSTRACTS OF JAPAN vol. 1995, no. 08, 29. September 1995 (1995-09-29) & JP 07 124154 A (SHISEIDO CO LTD), 16. Mai 1995 (1995-05-16)

## Beschreibung

Die vorliegende Erfindung betrifft ein neuartiges Ankoppelmedium für transversale Ultraschallwellen, wie sie beispielsweise im Bereich der Werkstoffprüfung eingesetzt werden.

Der Einsatz transversaler Ultraschallwellen in der zerstörungsfreien Werkstoffprüfung erfolgt mit entsprechenden Transversalwellenwandlern, die auf die Oberfläche des Prüfkörpers aufgesetzt werden. Die Messung kann hierbei im Puls-Echo-Verfahren oder mit einem Transmissionsverfahren erfolgen. Aus der Messung der Laufzeiten der Ultraschallimpulse können beispielsweise elastische Konstanten des Prüfkörpermaterials ermittelt werden.

Die Einkopplung der transversalen Ultraschallwellen in den Prüfkörper erfordert zur Vermeidung von Reflexionen ein entsprechendes Koppelmedium zwischen dem Sendewandler bzw. dem Empfangswandler und der Prüfkörperoberfläche. Während für die Einkopplung longitudinaler Schallwellen eine Vielzahl von Koppelmedien, wie beispielsweise Wasser, bekannt sind, bereitet die Bereitstellung entsprechender Materialien für die Einkopplung transversaler Schallwellen große Probleme. Derartige Koppelmedien müssen ausreichend scherstabil sein, so dass beispielsweise Wasser nicht geeignet ist.

In Krautkrämer, J. et al.: "Werkstoffprüfung mit Ultraschall", 5. Aufl. 1986, Springer, Seite 297 sind insbesondere zähflüssige Stoffe, wie Kabeltränkmasse, Heißdampf-Zylinderöl oder Getriebeöl (SAE 90), als geeignete Ankoppelmedien angeführt. Weiterhin wird auf Klebwachs, niedrigschmelzende Salze oder Kunststoffkleber verwiesen, mit dem der Prüfkopf dauerhaft auf die Prüfkörperoberfläche aufgekittet wird.

Alle diese Materialien weisen jedoch keine zufrieden stellenden Eigenschaften auf und lassen sich häufig nicht reproduzierbar bereitstellen. Insbesondere der Einsatz von Getriebeöl ist nach eigenen Untersuchungen nur im unteren Ultraschallfrequenzbereich (< 1 MHz) erfolgreich. Bei höheren Frequenzen, wie sie in der Werkstoffprüfung im Bereich zwischen 1 und 20 MHz häufig eingesetzt werden, ist das Öl nicht zur Einkopplung transversaler Ultraschallwellen geeignet.

Eine dauerhafte Ankopplung durch Aufkitten des Prüfkopfes auf den Prüfkörper ist bereits aus Gründen einer sinnvollen Prüfgeschwindigkeit nicht zu empfehlen.

Als weitere Substanz für ein Ankoppelmedium für transversale Ultraschallwellen ist die Verwendung von Honig bekannt. Sowohl Honig wie auch Leim sind jedoch nicht reproduzierbar herstellbar, unangenehm klebrig und lassen sich nicht ohne größeren Aufwand von der Prüfobjektoberfläche sauber wieder entfernen. Kommerziell erhältliche Medien zur Einkopplung transversaler Ultraschallwellen, die auf Basis von Honig hergestellt und durch Farbstoffe in der optischen Erscheinung verändert sind, sind zudem extrem teuer.

Eine wesentliche Eigenschaft, die ein Ankoppelmedium für transversale Ultraschallwellen aufweisen sollte, ist zum einen seine reproduzierbare Herstellbarkeit und zum anderen die Möglichkeit, eine sehr dünne Schicht dieses Mediums zwischen Prüfkopf und Prüfobjektoberfläche erzeugen zu können. Der Grund hierfür liegt im verwendeten Messprinzip der Laufzeitmessung. Die Gesamtlaufzeit des Schalls zwischen Sende- und Empfangswandler setzt sich aus den Laufzeitanteilen des Schalls in den einzelnen Komponenten des Systems zusammen, d.h. bei einer Messung im Transmissionsverfahren aus der Laufzeit in der Koppelschicht zwischen Sendewandler und Prüfkörper, der Laufzeit im Prüfkörper und der Laufzeit in der Koppelschicht zwischen Prüfkörper und Empfangswandler. Für eine genaue Messung ist es daher erforderlich, entweder die Dicke der Koppelmedien und die darin auftretenden Schallgeschwindigkeiten exakt zu kennen, oder eine extrem dünne, nur wenige Atomschichten dicke Koppelschicht zu erzeugen, deren Laufzeitanteil im Rahmen der Messgenauigkeit vernachlässigt werden kann.

Gerade diese Anforderungen bereiten bei den bekannten Koppelmedien des Standes der Technik Probleme. Einerseits ist ihre Schallgeschwindigkeit nicht in jedem Fall bekannt, andererseits lassen sie sich nicht mit einer definierten Dicke zwischen den Oberflächen des Prüfkopfes und des Prüfobjektes erzeugen, die beispielsweise nur vom Anpressdruck des Wandlers auf den Prüfkörper abhängig ist. Gerade das häufig eingesetzte Ankoppelmedium auf Basis von Honig bildet beim Anpressen Kristalle, so dass die Dicke dieser Koppelschicht von Messung zu Messung unterschiedlich, also undefinierbar ist. Die Kristallbildung hängt hierbei von nicht kontrollierbaren Randbedingungen wie Temperatur, Luftfeuchte, Wassergehalt und ähnlichem ab.

Aus dem Stand der Technik sind weiterhin Ankoppelmittel für longitudinale Ultraschallwellen, wie sie insbesondere in der medizinischen Diagnostik eingesetzt werden, bekannt. So beschreibt die US 4,905,700 ein Ultraschall-Ankoppelmedium für die Untersuchung des menschlichen Körpers, das aus einem Hydrogel-Blatt besteht, das einen Wassergehalt von > 90% aufweist und Polysacharid enthält.

Weiterhin offenbart die JP 07/124154 ein Kontaktmedium für Ultraschallanwendungen in der medizinischen Diagnostik, das aus einem Gel besteht, das sich aus Polysachariden zusammensetzt. Der Wassergehalt des Gels liegt oberhalb von 80%. Auch hierbei handelt es sich aufgrund des Anwendungsgebietes der medizinischen Diagnostik um ein Ankoppelmedium für longitudinale Ultraschallwellen, nicht jedoch um ein Ankoppelmedium für transversale Ultraschallwellen.

Die Anforderungen an ein Ankoppelmedium für transversale Ultraschallwellen unterscheiden sich deutlich von den Anforderungen für ein Ankoppelmedium für longitudinale Ultraschallwellen, so dass die in den letztgenannten Druckschriften genannten Ankoppelmedien für die Ankopplung von transversalen Ultraschallwellen vollständig ungeeignet sind.

Ausgehend von diesen Problemen des Standes der Technik liegt der Erfindung die Aufgabe zugrunde, ein Ankoppelmittel für transversale Ultraschallwellen bereitzustellen, das gute Ankopplungseigenschaften für die transversalen Ultraschallwellen aufweist, reproduzierbar herstellbar und mit reproduzierbarer Dicke zwischen Prüfkopfoberfläche und Oberfläche des Prüfobjektes einstellbar ist.

Die Aufgabe wird mit dem Mittel der Ansprüche 1 bzw. 3 gelöst. Vorteilhafte Ausgestaltungen sind in den Unteransprüchen angegeben.

Erfindungsgemäß wurde hierbei erkannt, dass eine homogenisierte Mischung aus einem Polysaccharid, einer oberflächenaktiven Substanz und Wasser als Ankoppelmedium für transversale Ultraschallwellen hervorragend geeignet ist, wobei unter Polysacchariden auch Disaccharide zu verstehen sind. Ein derartiges Mittel lässt sich auf einfache Weise reproduzierbar herstellen und weist ausgezeichnete Ankopplungseigenschaften auf. Das derartig zusammengesetzte Ankoppelmedium ist weiß und cremeartig, hat also eine angenehme Konsistenz und optische Erscheinung. Das Mittel kann beliebig eingefärbt werden und ist längere Zeit haltbar. Es lässt sich mit Wasser sehr leicht von den Prüfoberflächen wieder entfernen.

Mit dem erfindungsgemäßen Ankoppelmittel ist es möglich, transversale Ultraschallwellen in Materialien verschiedenster Beschaffenheit, wie beispielsweise Haut, Festkörperoberflächen, Prüfkörper etc. einzukoppeln. Das Koppelmedium reagiert hierbei ausgezeichnet auf Scherkräfte und ist in der Ankoppelleistung vergleichbar den bisher verwendeten, jedoch nicht standardisierten Koppelmedien wie Leim oder Honig. Es stellt zudem eine sehr kostengünstige Variante eines Koppelmediums dar.

In einer bevorzugten Ausführungsform werden ausschließlich nicht toxische und bioverträgliche Polysaccharide und oberflächenaktive Substanzen eingesetzt.

Das erfindungsgemäße Koppelmittel hat den besonderen Vorteil, dass es sich nach dem Auftragen auf die Oberfläche des Prüfkörpers oder des Prüfkopfes auf eine reproduzierbare Dicke einstellen lässt. Diese Dicke kann durch einen definierten Anpressdruck des Prüfkopfes auf die Prüfkörperoberfläche erzeugt werden. Wird bei jeder Messung der gleiche Druck aufgebracht, so ergibt sich immer die gleiche Schichtdicke des Koppelmittels. Mit dem Koppelmittel können zudem sehr dünne Schichten von nur wenigen Atomlagen zwischen den Oberflächen des Prüfkopfes und des Prüfobjektes erzeugt werden, so dass die Laufzeit des Ultraschalls in dieser Koppelschicht bei den Messungen vernachlässigt werden kann.

Eine besondere Eigenschaft der vorliegenden Erfindung ist die reproduzierbar geringe Schallschwächung des entwickelten Koppelmittels, wodurch der transmittierte Anteil der Schallwellen im Vergleich zu den aus dem Stand der Technik bekannten Mitteln zunimmt. Dies wird durch die einstellbare infinitesimale Dicke der Koppelschicht und durch den geringen Schwächungskoeffizienten des Materials erreicht. Dadurch steht bei gegebener Anregungsenergie im Inneren des Prüfkörpers eine höhere Intensität zur Verfügung, so dass tiefer gelegene Strukturen besser oder überhaupt erst detektierbar werden.

Die Mischungsverhältnisse des Wassers, der oberflächenaktiven Substanz sowie des Polysaccharides bewegen sich vorzugsweise im Bereich von 10 bis 30 Gew.% für Wasser, von 10 bis 30 Gew.% für die oberflächenaktive Substanz und von 40 bis 80 Gew.% für das Polysaccharid.

Bevorzugte Polysaccharide sind Stärke, Hyaluronsäure, Polyglucane, Amylose, Dextrin oder Disaccharide wie Sukrose, Saccharose oder Trehalose. Als oberflächenaktive Substanzen werden vorzugsweise Lipide, Aerosol-OT, Phospholipide oder Glykolipide eingesetzt.

Die besonders gute Übertragung der Scherkräfte wird insbesondere durch eine dreidimensional vernetzte molekulare Struktur hervorgerufen, die sich in der erfindungsgemäßen Mischung bildet und Wasser hinreichend molekular in Mikroräumen immobilisiert.

Im Folgenden ist ein Ausführungsbeispiel für ein derartiges Ankoppelmedium dargestellt. Hierbei wird eine Mischung aus Aerosol-OT zu 22 Gew.%, Trehalose zu 56 Gew.% und Wasser zu 22 Gew.% in folgenden Schritten hergestellt:
1. Herstellung einer Aerosol-OT-Dispersion mit wenig Wasser zur Erzeugung einer hochviskosen Dispersion.
2. Schrittweises Zufügen von Trehalose und Wasser unter Rühren bis eine homogene Mischung erzeugt ist.

## Patentansprüche

1. Verwendung einer homogenisierten Mischung aus zumindest einem Polysaccharid, einer oberflächenaktiven Substanz und Wasser in cremeartiger Konsistenz als Ankoppelmittel für transversale Ultraschallwellen.

2. Verwendung nach Anspruch 1,
bei der eine Schicht der Mischung zwischen eine Oberfläche eines Prüfkörpers und eine Oberfläche eines Sende- bzw. Empfangswandlers für transversale Ultraschallwellen gebracht wird, und beide Oberflächen zusammengedrückt werden.

3. Ankoppelmittel für transversale Ultraschallwellen, bestehend aus einer homogenisierten Mischung aus zumindest einem Polysaccharid, einer oberflächenaktiven Substanz und Wasser, wobei die Mischung eine cremeartige Konsistenz aufweist.

4. Ankoppelmittel nach Anspruch 3,
**dadurch gekennzeichnet,**
**dass** die Mischung aus maximal 50% Wasser besteht.

5. Ankoppelmittel nach Anspruch 3 oder 4,
**dadurch gekennzeichnet,**
**dass** die Mischung nur aus biokompatiblen Substanzen besteht.

## Claims

1. Use of a homogenized mixture of at least one polysaccharide, a surface-active substance and water in a creamy consistency as a coupling medium for transverse ultrasonic waves.

2. A use according to claim 1, wherein a layer of the mixture is applied between a surface of a probe and a surface of a transmitting respectively receiving transducer for transverse ultrasonic waves and said two surfaces are pressed together.

3. A coupling medium for transverse ultrasonic waves, comprising a homogenized mixture of at least a polysaccharide, a surface-active substance and water, with said mixture having a creamy consistency.

4. A coupling medium according to claim 3, wherein said mixture is composed of a maximum of 50% water.

5. A coupling medium according to claim 3 or 4, wherein said mixture is composed solely of biocompatible substances.

## Revendications

1. Application d'un mélange homogénéisé d'au moins un polysaccharide, d'une substance tensioactive et de l'eau à une consistance crémeuse en tant qu'un milieu de couplage pour des ondes ultrasonores transversales.

2. Application selon la revendication 1,
dans laquelle une couche dudit mélange est introduit entre une surface d'un corps à essayer et une surface d'un transducteur récepteur ou respectivement récepteur pour ondes ultrasonores transversales, et dans laquelle les deux surfaces sont pressées l'une contre l'autre.

3. Milieu de couplage pour ondes ultrasonores transversales, constitué par un mélange homogénéisé d'au moins un polysaccharide, d'une substance tensioactive et de l'eau, ce mélange présentant une consistance crémeuse.

4. Milieu de couplage selon la revendication 3,
**caractérisé en ce**
**que** le mélange est constitué par de l'eau à un niveau de 50 % au maximum.

5. Milieu de couplage selon la revendication 3 ou 4,
**caractérisé en ce**
**que** le mélange n'est composé que des substances biocompatibles.
